# EUROPÄISCHE PATENTSCHRIFT

(11) **EP 2 263 856 B1**
(45) Veröffentlichungstag und Bekanntmachung des Hinweises auf die Patenterteilung: **29.02.2012**
(21) Anmeldenummer: 10162506.9
(22) Anmeldetag: 11.05.2010
(51) Int. Cl.: B29C 51/00, B29C 71/04, B29D 7/01

(54) **Verfahren zur Herstellung eines Formkörpers**
Method for manufacturing a molded product
Procédé de fabrication d'un corps moulé

(30) Priorität: 18.06.2009 DE 102009025994
(43) Veröffentlichungstag der Anmeldung: 22.12.2010
(73) Patentinhaber: Benecke-Kaliko AG, 30419 Hannover (DE)
(72) Erfinder: Bühring, Jürgen, 30900 Wedemark (DE); Hülsewede, Volker, 73114 Schlat (DE); Mani, Joseph, 73054 Eislingen (DE)
(74) Vertreter: Finger, Karsten

(56) Entgegenhaltungen:
- EP-A1- 1 149 858
- WO-A1-94/06612
- DE-A1- 4 407 465
- DE-A1- 19 610 415
- DE-A1-102005 051 392
- DE-A1-102006 011 159

## Beschreibung

Die Erfindung betrifft ein Verfahren zur Herstellung eines Formkörpers mit einer dreidimensional strukturierten Oberfläche für die Innenverkleidung von Kraftfahrzeugen.

Thermoplastische Formkörper, auch Formteile, Formfolien oder - häute, für die Innenverkleidung von Kraftfahrzeugen sind weithin bekannt und werden z. B. verwendet für die Innenverkleidung in Fahrzeugen, also als Überzug von Armaturenbrettern, Türeinsätzen, Sonnenblenden etc. eingesetzt. Solche Formkörper bestehen üblicherweise aus einer mehrschichtigen unterschäumten Kunststoff-Folie, die auf ihrer Oberseite eine dreidimensional strukturierte, geprägte Oberfläche aufweist, nämlich eine so genannte Musterung oder Narbung in verschiedensten Formen und Ausführungen.

Die Formkörper oder Formfolien bestehen oft aus einer kompakten Oberschicht, nämlich der Deck- oder Dekorschicht, die mit der geprägten oder eingeformten Oberfläche versehen ist, und aus einer auf der Unterseite auflaminierten / aufgeklebten Schaumschicht niedriger Dichte als Unterschicht, die eine ansprechende Haptik, d.h. eine angenehm "weiche" Griffigkeit des Bezuges bereitstellt. Dabei ist die Oberschicht auch als "Kompaktfolie" bekannt.

Sowohl die Oberschicht als auch die Unterschicht der Formkörper können dabei aus unterschiedlichen Zusammensetzungen und unterschiedlichen Basisrohstoffen bestehen, also etwa aus Kunststoffen wie PVC (Polyvinylchlorid), PP (Polypropylen), TPO (Polyolefin) etc. oder einer Kombination aus solchen oder ähnlichen Materialien.

Im Stand der Technik sind zur Herstellung solcher Formkörper verschiedene Verfahren bekannt, zum Beispiel das Standard-Tiefziehverfahren, bei dem das Einformen einer vorher hergestellten und durch Walzverfahren mit einer Oberflächen-Prägung oder - Narbung versehenen Folie in eine dreidimensionale, bauteil-geometrische Struktur durch das Einfahren eines die spätere Bauteilkontur bildenden Tiefziehstempels in die Folie erfolgt. Ein weiteres Verfahren zur Herstellung von werkzeugfallenden einzelnen Formkörpern ist das "Inmould-Graining-Verfahren (IMG-Verfahren)", welches sich als Spezialverfahren aus dem Negativ-Tiefziehverfahren entwickelt hat. Dieses Inmould-Graining-Verfahren, bisher im Wesentlichen mit seinem englischsprachigen Begriff bekannt, lässt sich wohl am besten mit dem Begriff " narbgebendes Negativtiefziehen" übersetzen.

Die Anforderungen an das Ausgangsmaterial sind beim Standardziehverfahren und beim narbgebenden Negativtiefziehen unterschiedlich.

Beim Standardziehverfahren ist die Folie bereits mit eine Narbung , d.h. mit einer durch ein vorhergehendes Walzverfahren durchgeführten Oberflächen-Prägung versehen. Diese Narbung darf durch das Strecken der Folie beim Tiefziehprozess nicht zerstört oder verändert werden. Dazu muss die Folie und ihre Narbung so stabil sein, dass eine solche Schädigung sicher vermieden wird. Um diese Stabilität zu erreichen, wird die Folie im Stand der Technik vor dem Tiefziehen vernetzt, etwa durch zugegebene Additive als Vernetzungshilfsmittel oder durch eine vor dem Tiefziehen erfolgende Elektronenstrahlvernetzung.

Natürlich muss das Folienteil auch thermisch stabil sein, um die Alterungsanforderungen sowie die Forderungen hinsichtlich der thermischen Beständigkeit während des späteren Einsatzes zu erfüllen.

Im Automobilbereich werden in den unterschiedlichsten Bereichen Formkörper aus/mit Folien und Folienlaminate eingesetzt, die auf Polyolefinen basieren. So werden z. B. insbesondere im Bereich von Automobil-Innenverkleidungen Folien oder Folienlaminate aus Polyolefinen durch die oben beschriebenen Tiefziehprozesse oder andere verformende Prozesse weiterverarbeitet, um die gewünschte Form, beispielsweise die Form eines Dachhimmels oder einer Türverkleidung zu erhalten.

An die Folien oder Folienlaminate werden hohe Anforderungen hinsichtlich ihrer chemischen und physikalischen Eigenschaften gestellt, so sollen sie z. B. gut verarbeit-, laminier- und prägbar sein, eine hohe Gebrauchstüchtigkeit, d.h. eine hohe Abrieb- und Kratzbeständigkeit, eine hohe Medienbeständigkeit, eine hohe Initialmattigkeit und nach der Verarbeitung eine gute Narbstabilität und eine weiterhin gleichbleibend hohe Mattigkeit aufweisen.

Im Bereich des Automobilinterieurs ist zudem ein starker Trend zur Verbesserung der Qualitätsanmutung zu beobachten. Dieser Trend hat dazu geführt, dass bei vielen der typischen Folienanwendungen in Form von Formkörpern im Dekorbereich Kriterien wie die Griffigkeit, das "Anfühlen" (Haptik) und das gesamte optische und taktile Erscheinungsbild einen sehr hohen Stellenwert in der Beurteilung durch die Kunden gewonnen haben. Demzufolge dürfen die Oberflächen auch nicht zu sehr glänzen, sondern müssen einen gewisse angenehme "matten Glanz" aufweisen, dürfen auch bei starker Sonneneinstrahlung nicht reflektieren und müssen kratzbeständig und auch nach langem Einsatz noch ansehnlich sein.

Um bei Dekorfolien ein angenehmes Griffempfinden oder eine gewünschte Berühr-Haptik zu generieren, wird, wie oben bereits dargestellt, die zu kaschierende Folie häufig rückseitig mit einer geschäumten Unterfolie versehen, wobei der Schaum gleichzeitig noch eine Schutzfunktion für die Dekorfolie gegenüber dem rückseitig auf die Folie gepressten Trägermaterial bietet. Als Schäume für die Folienlaminate finden primär Polyolefinschäume Anwendung, basierend vorrangig auf Polyethylen und/oder Polypropylen.

Ein Verfahren zur Herstellung von genarbten Folien wird in der EP-A-1 149 858 beschrieben. Es werden Dekorfolien auf Polyolefinbasis für Anwendungen im Automobilinterieur offenbart, bei denen Kriterien wie Narbstabilität, Narbhomogenität nach dem Verformprozess, Haptik, Alterungsstabilität, Lichtechtheit, Emissionsarmut usw. von großer Bedeutung sind. Bei dem dort offenbarten Verfahren zur Herstellung der Folie wird aus unvernetzten Polyolefinen und ggf. weiteren Additiven eine Folie hergestellt. Diese Folie wird geprägt und zum Erzielen einer für ein Tiefziehverfahren geeigneten Narbstabilität mit Elektronenstrahlen behandelt. Die behandelte Folie wird dann zu einem Formkörper mit genarbter Oberfläche tiefgezogen. In der EP-A- 1 149 858 wird auch die Möglichkeit angesprochen, dass die für die Ausbildung der Folie verwendete Polyolefinmasse einen geringen Anteil (weniger als 10 %) an vorvernetzten Polymeren enthalten kann, was mit einem Gelgehalt der Folie von deutlich weniger als 3 Gew.-% einhergeht. Durch die nachträgliche Vernetzung durch Elektronenstrahlen wird sichergestellt, dass eine sehr homogene Verteilung der Netzknoten sichergestellt wird, was für eine sehr gute Narbstabilität der geprägten Oberflächen essentiell ist. Gleichzeitig wird durch die nachträgliche Vernetzung sichergestellt, dass die Herstellung der genarbten Folie nicht durch eine großflächige Vorvernetzung (dynamische Vernetzung) während der Folienextrusion wie sie beispielsweise in DE 4421128A1 beschrieben wird, beeinträchtigt wird.

Die in der EP-A-1 149 858 beschriebenen Polyolefine weisen verglichen mit anderen Materialklassen jedoch den großen Nachteil auf, dass sie ausgesprochen sensibel gegenüber der Einwirkung von kratzenden Oberflächeneinflüssen sind. Üblicherweise wird zur Messung der Kratzbeständigkeit für Dekoroberflächen im automobilen Innenraum eine Kratzprüfung mittels des Erichsenstabes 318 eingesetzt. Die Mindestanforderung liegt hier bei einer Beständigkeit von mindestens 3N, was durch Polyolefin-Materialien für dekorative Oberflächen im Automobilinnenraum nicht erreicht wird.

Die DE 4423882 und DE 4423883 offenbaren eine Folienzusammensetzung mit erhöhter Narbstabilität und hoher Mattigkeit. Dieses wird erreicht durch den Einsatz einer vernetzten PP-EPDM Mischung sowie einer Oberfolie enthaltend u.a. reaktive Gruppen enthaltende Polymere. Allerdings reicht die Mattigkeit solcher Folien nach dem Tiefziehen bei weitem nicht aus, um die Anforderungen der modernen Automobilkunden nach extrem matten Oberflächen insbesondere nach dem Verformprozess zu erfüllen. Durch den Einsatz von polaren Polymeren wie beispielsweise hier den Ionomeren wird die Kratzbeständigkeit der Oberfläche zwar erhöht, allerdings weisen diese Polymere aufgrund ihres niedrigen Schmelzpunktes in hohem Maße eine Problem mit dem Glanzgrad insbesondere nach thermischer Belastung auf. Dieses Problem kann dadurch abgemildert werden, dass man, wie in DE 4423882 beschrieben, die Carboxylatgruppen der lonomere beispielsweise mit epoxidgruppenhaltigen Polymeren während der Extrusion vernetzt.

Nachteilig dabei ist allerdings, dass dadurch die dynamische Vernetzung während des Extrusionsprozesses und dem damit verbundenen Viskositätsanstieg die Extrusionstemperaturen und- drücke extrem ansteigen, nämlich bis zur Überlastung des Extruders. Auch führen Temperatur- und Durckanstieg zu einem hohen Energieverbrauch bei der Extrusion. Zudem kann die Temperaturerhöhung zu einer Polymerschädigung führen. Weiterhin führt die hohe Folienviskosität zu Problemen bei dem im weiteren folgenden Prägeschritt, also das Einbringen einer Narbe in die Folienoberfläche. Durch die hohe Folienviskosität wird die Güte der Narbübertragung vom Prägewerkzeug entscheidend negativ beeinträchtigt.

Problematisch ist dabei auch, dass durch die hohe Folienviskosität bei Folien, die beim Prägeschritt bereits erhebliche Anteile an vernetzten Strukturen aufweisen, die eingebrachte Narbinformation beim erneuten Erhitzen der Oberfläche, wie es üblicherweise bei den Verformvorgängen der Folie im Rahmen der Bauteilherstellung geschieht, wieder verlorengeht ("Memory Effekt").

Neben den genannten Effekten führt die erhöhte Viskosität der vorvernetzten Materialien ebenfalls zu einer entscheidenden Reduktion der Fertigungsgeschwindigkeiten und damit zu einer signifikanten Produktverteuerung.

Wie bereits oben erwähnt, ist es durch die höheren Anforderungen an die Qualitätsanmutung für den Einsatz von Folien im automobilen Innenraum wesentlich, dass die Folien eine hohe Weichheit aufweisen. Dazu werden üblicherweise polyolefinische Kautschuke eingesetzt. Allerdings verringert sich damit die Narbbeständigkeit aufgrund des geringen Schmelzpunktes dieser Komponenten, die sich üblicherweise signifikant unterhalb der Verarbeitungstemperaturen dieser Folien von > 130°C befindet. Um diesen Nachteil aufzufangen werden der Polymermischung üblicherweise hohe Mengen an kristallinen Polymeren wie Polypropylen hinzugegeben, was die Materialsteifigkeit nachteilig beeinflusst.

Die US 6,207,761 B1 offenbart für die Herstellung einer Folie einen thermoplastischen Ionomerblend, enthaltend
a) 15-85% eines carboxylgruppenhaltigen thermoplastischen Polymers
b) 10-80% eines thermoplastischen Elastomers aus der Gruppe der vernetzten Ethylen-Propylen Copolymeren, Acrylnitril-Butadien-Copolymeren, Styrol-Butadien-Copolymeren und Styrol-Acrylnitril Pfropfcopolymerer, und
c) 5-40% eines Polyethylen oder Polypropylens

Diese Folienzusammensetzung zeichnet sich zwar durch eine recht hohe Kratzfestigkeit aus, weist allerdings einen für den automobilen Innenraum nicht akzeptablen hohen Glanzgrad auf.

Die DE 10 2006 011 159 A1 offenbart ein Verfahren zur Herstellung einer thermoplastischen Folie, bei der letztere vor einem nachfolgendem formgebenden Verarbeitungsschritt abhängig von den Auszugsgraden einer Ionenstrahlvernetzung unterworfen wird. Besondere Maßnahmen zur Beeinflussung des Glanzgrades oder der Kratzfestigkeit sind nicht offenbart.

Die DE 196 10 415 A 1 offenbart eine thermoplastische Formmasse aus einer Polymermischung, die auch ein ionomeres Copolymer enthält und die eine hohe Kratzfestigkeit besitzt. Die Formmasse wird insbesondere zur Herstellung von harten Formkörpern verwendet.

Die WO 94/06612 A1 offenbart mit thermoplastischem Material beschichtete Formkörper, die durch Schmelzform- oder Blasformverfahren hergestellt werden und bei denen die Beschichtung aus einem Gemisch von metallischen Materialien, feindispersen Glanzkörpern und Stabilisatoren besteht.

Für die Erfindung bestand also die Aufgabe, ein Verfahren zur Herstellung eines Formkörpers anzugeben, das eine verbesserte Narbabformung erlaubt, das eine hohe Narbstabilität erzeugt und eine sichere Verarbeitung erlaubt und das eine Oberfläche des Formkörpers mit ausreichend mattem Glanz, d.h. "Mattigkeit" und einer hohen Kratzbeständigkeit sicherstellt.

Gelöst wird diese Aufgabe durch die Merkmale des Hauptanspruchs. Weitere vorteilhafte Ausbildungen sind in den Unteransprüchen offenbart. Ebenfalls ist ein Verkleidungsteil mit einem solchen Formkörper offenbart.

Das erfindungsgemäße Verfahren weist dabei die folgenden Verfahrensschritte auf:
ein Ausgangsmaterial, welches als wesentliche Bestandteile unvernetzte Polyolefine und unvernetzten Ionomere und ggf. weitere Additive enthält, wird gemischt und als flächiger Folie - als flächiger Folienkörper - ausgebracht, die Folie wird anschließend einer Prägung der Folienoberfläche zur Herstellung der dreidimensional strukturierten Oberfläche unterworfen, danach erst erfolgt eine Vernetzung des Folienkörpers und die Folie wird letztlich zur Bildung des Formkörpers in oder auf eine Bauteilform tiefgezogen.

Durch die Verwendung eines Ausgangsmaterial, welches als wesentliche Bestandteile ausschließlich unvernetzte Polyolefine enthält, und durch die erfindungsgemäßen Verfahrensschritte, erhält man einen Formkörper mit einer Oberfläche, deren Kratzfestigkeit/Kratzbeständigkeit geprüft nach Erichsen 318 mit einem Nadeldurchmesser von 0,75 mm mindestens 3N oder mehr beträgt. Außerdem weist überraschenderweise die Oberfläche der so hergestellten Formkörper einen Glanzgrad, gemessen unter einem Winkel von 60° mit einem Gerät Byk Mikro Gloss, von höchstens 2,0 auf, regelmäßig sogar kleiner als 1,5 und oft kleiner als 1,0 auf.

Die Folie ist dabei mehrlagig als Folienverbund ausgebildet und besteht aus einer Oberfolie und ein oder mehreren unteren Folien. Hierdurch ergibt sich eine sehr gut Möglichkeit zur Anpassung der Folieneigenschaften auf den Verwendungszweck.

Für die gewünschte Oberflächenbeschaffenheit ist es völlig ausreichend, dass ausschließlich die Oberfolie als wesentliche Bestandteile ausschließlich unvernetzte Ionomere enthält.

Eine vorteilhafte Weiterbildung besteht in der Extrusion der Folien, da bei dem hier eingesetzten Ausgangsmaterial die Verarbeitung zu einem flächigen Folienkörper mittels Extrusion / mit einem Extruder völlig unproblematisch wird, weil keine dynamische Vernetzungen während des Extrusionsprozesses entstehen können.

Eine weitere vorteilhafte Ausbildung im Sinne einer Energieeinsparung besteht bei einer mehrlagigen Folie darin, dass während der Vernetzung der Folienverbund zunächst mit der ionomerfolienhaltigen Seite der Strahlquelle abgewandt die Vernetzungsanlage durchläuft. Natürlich ist damit nicht ausgeschlossen, dass auch die ionomerfolienhaltigen Seite der Strahlquelle zugewandt die Vernetzungsanlage durchlaufen kann.

Eine weitere vorteilhafte Ausbildung besteht darin, dass die Dicke der Oberfolie zwischen 50 µm bis 800µm beträgt. Dadurch lassen sich Festigkeiten und die Narbstabilität der Folien ausreichend für die unterschiedlichen Verfahrensparameter und Anwendungen variieren.

Eine weitere vorteilhafte Ausbildung im Sinne erhöhter Kratzbeständigkeit besteht darin, dass der Ionomergehalt der Folie -der Oberfolie - zwischen 25% und 95% liegt, vorzugsweise zwischen 40% und 75%.

Eine weitere vorteilhafte Ausbildung im Sinne der Verbesserung von Kratzbeständigkeit, Narbstabilität und Glanzgrad besteht darin, dass das Ionomer Ethylen und/oder Propylen sowie eine α, β-ungesättigte Carbonsäure und/oder einer Sulfonsäure enthält.

Eine weitere vorteilhafte Ausbildung im Sinne der Verbesserung von Kratzbeständigkeit, Narbstabilität und Glanzgrad besteht darin, dass das Ionomer Ethylen sowie mindestens 9% einer α, β-ungesättigtem Carbonsäure bzw. Sulfonsäure enthält, wobei die Säuregruppen zu 20 bis 90 % mit Zink- oder Natrium-Ionen neutralisiert sind.

Eine weitere vorteilhafte Ausbildung im Sinne der Verbesserung Narbstabilität, Griffigkeit und Glanzgrad besteht darin, dass der Anteil des Kautschuks mit einem Kristallinitätsgrad von weniger als 20% an der Gesamtheit der Polyolefine zwischen 20 % und 70% insbesondere zwischen 50% und 70% liegt.

Eine weitere vorteilhafte Ausbildung im Sinne der Verbesserung insbesondere der Mattigkeit, d.h. der Verringerung von unerwünschten Glanzeffekten besteht darin, dass die durchschnittliche Domänengröße der eingesetzten Polyolefinkomponenten kleiner als 20 µm, besonders bevorzugt kleiner als 5 oder kleiner als 2µm ist. Größere Domänengrößen sind sicher möglich, jedoch werden im Stand der Technik bei Mischungen lediglich Domänengrößen von kleiner als 100µm erreicht, was diese besonders gewünschte Mattigkeit in der Regel nicht erreichen lässt.

Eine weitere vorteilhafte Ausbildung besteht darin, dass der nach der Vernetzung vorliegende Gelgehalt der Oberfolie zwischen 10% und 45%, bevorzugt zwischen 15% und 35% und besonders bevorzugt zwischen 20% und 30% liegt.

Eine weitere vorteilhafte Ausbildung im Sinne einer gesteigerten weichen Griffigkeit besteht darin, dass die Oberfolie mit einer rückseitigen Schaumschicht bzw. Schaumfolie versehen wird.

Insbesondere geeignet ist ein solcher Formkörper für ein Verkleidungsteil für den Innenraum eines Fahrzeuges, welches aus einer Trägerstruktur und dem darauf aufgebrachten und erfindungsgemäß hergestellten Formkörper besteht.

## Patentansprüche

1. Verfahren zur Herstellung eines Formkörpers mit einer dreidimensional strukturierten Oberfläche für die Innenverkleidung von Kraftfahrzeugen, welches die folgenden Verfahrensschritte aufweist:
- ein Ausgangsmaterial, welches als wesentliche Bestandteile unvernetzte Polyolefine und ggf. weitere Additive enthält,wird gemischt und als flächige Folie - als flächiger Folienkörper - ausgebracht,
- die Folie wird anschließend einer Prägung der Folienoberfläche zur Herstellung der dreidimensional strukturierten Oberfläche unterworfen,
- es erfolgt danach eine Vernetzung des Folienkörpers und
- die Folie wird letztlich zur Bildung des Formkörpers in einer Bauteilform tiefgezogen,
**dadurch gekennzeichnet,**
- **dass** die Folie mehrlagig als Folienverbund ausgebildet ist und aus einer Oberfolie und ein oder mehreren unteren Folien besteht
- wobei ausschließlich die Oberfolie als weitere wesentliche Bestandteile unvernetzte Ionomere enthält,

2. Verfahren nach Anspruch 1, bei dem das Ausgangsmaterial mit einem Extruder als flächiger Folienkörper extrudiert wird.

3. Verfahren nach einem der Ansprüche 1 oder 2, bei dem während der Vernetzung der Folienverbund zunächst mit der ionomerfolienhaltigen Seite der Strahlquelle abgewandt die Vernetzungsanlage durchläuft.

4. Verfahren nach einem der Ansprüche 1 bis 3, bei dem die Dicke der Oberfolie zwischen 50 µm bis 800 µm beträgt.

5. Verfahren nach einem der Ansprüche 1 bis 4, bei dem der Ionomergehalt der Oberfolie zwischen 25 % und 95 % liegt.

6. Verfahren nach einem der Ansprüche 1 bis 5, bei dem das Ionomer Ethylen und/oder Propylen sowie eine α,β-ungesättigte Carbonsäure und/oder eine Sulfonsäure enthält.

7. Verfahren nach einem der Ansprüche 1 bis 6, bei dem das Ionomer Ethylen sowie mindestens 9 % einer α,β-ungesättigtem Carbonsäure bzw. Sulfonsäure enthält, wobei die Säuregruppen zu 20 bis 90 % mit Zink- oder Natrium-Ionen neutralisiert sind.

8. Verfahren nach einem der Ansprüche 1 bis 7, bei dem der Anteil des Kautschuks mit einem Kristallinitätsgrad von kleiner als 20 % an der Gesamtheit der Polyolefine zwischen 20 % und 70 % liegt.

9. Verfahren nach einem der Ansprüche 1 bis 8, bei dem die durchschnittliche Domänengröße der eingesetzten Polyolefinkomponenten kleiner als 20 µm ist.

10. Verfahren nach einem der Ansprüche 1 bis 9, bei dem der nach der Vernetzung vorliegende Gelgehalt der Oberfolie zwischen 10 % und 45 % liegt.

11. Verfahren nach einem der Ansprüche 1 bis 10, bei dem die Oberfolie mit einer rückseitigen Schaumschicht bzw. Schaumfolie versehen wird.

## Claims

1. Process for producing a moulding with a three-dimensionally structured surface for the interior cladding of motor vehicles, which has the following steps:
- a starting material which comprises uncrosslinked polyolefins as essential constituents and optionally other additives is mixed and is spread to form a sheet-like foil - a sheet-like foil structure,
- the foil is then subjected to embossment of the foil surface to produce the three-dimensionally structured surface,
- the foil structure is then crosslinked and
- finally, the foil is thermoformed to form the moulding in a component mould,
**characterized in that**
- the foil takes the form of a foil composite having a plurality of layers and is composed of an upper foil and of one or more lower foils,
- where exclusively the upper foil comprises uncrosslinked ionomers as other essential constituents.

2. Process according to Claim 1, in which the starting material is extruded by an extruder to give a sheet-like foil structure.

3. Process according to Claim 1 or 2, in which, during the crosslinking process, the ionomer-foil-bearing side is facing away from the radiation source when the foil composite first passes through the crosslinking system.

4. Process according to any of Claims 1 to 3, in which the thickness of the upper foil is from 50 µm to 800 µm.

5. Process according to any of Claims 1 to 4, in which the ionomer content of the upper foil is from 25% to 95%.

6. Process according to any of Claims 1 to 5, in which the ionomer comprises ethylene and/or propylene, and also an α,β-unsaturated carboxylic acid and/or a sulphonic acid.

7. Process according to any of Claims 1 to 6, in which the ionomer comprises ethylene, and also at least 9% of an α,β-unsaturated carboxylic acid or sulphonic acid, where from 20 to 90% of the acid groups have been neutralized with zinc ions or with sodium ions.

8. Process according to any of Claims 1 to 7 in which the content of the rubber with a degree of crystallization smaller than 20%, based on the entirety of the polyolefins, is from 20% to 70%.

9. Process according to any of Claims 1 to 8, in which the average domain size of the polyolefin components used is smaller than 20 µm.

10. Process according to any of Claims 1 to 9, in which the gel content present in the upper foil after the crosslinking process is from 10% to 45%.

11. Process according to any of Claims 1 to 10, in which the upper foil is provided with a reverse-side foam layer or foam foil.

## Revendications

1. Procédé de fabrication d'un corps moulé ayant une surface structurée tridimensionnellement pour le revêtement intérieur d'automobiles, qui comprend les étapes de procédé suivantes :
- un matériau de départ, qui contient en tant que constituants essentiels des polyoléfines non réticulées et éventuellement des additifs supplémentaires, est mélangé et déployé sous la forme d'un film plat (sous la forme d'un corps en film plat),
- le film est ensuite soumis à un estampage de la surface du film pour la fabrication de la surface structurée tridimensionnellement,
- une réticulation du corps en film a ensuite lieu, et
- le film est enfin embouti pour mettre le corps moulé sous la forme d'un élément,
**caractérisé en ce que**
- le film est formé de plusieurs couches sous la forme d'un composite en film et est constitué d'un film supérieur et d'un ou de plusieurs films inférieurs,
- seul le film supérieur contenant des ionomères non réticulés en tant que constituants essentiels supplémentaires.

2. Procédé selon la revendication 1, dans lequel le matériau de départ est extrudé en un corps en film plat avec une extrudeuse.

3. Procédé selon l'une quelconque des revendications 1 ou 2 , dans lequel, pendant la réticulation, le composite en film traverse tout d'abord l'unité de réticulation avec le côté contenant un film ionomère détourné de la source de rayonnement.

4. Procédé selon l'une quelconque des revendications 1 à 3, dans lequel l'épaisseur du film supérieur est comprise entre 50 µm et 800 µm.

5. Procédé selon l'une quelconque des revendications 1 à 4, dans lequel la teneur en ionomères du film supérieur est comprise entre 25 % et 95 %.

6. Procédé selon l'une quelconque des revendications 1 à 5, dans lequel l'ionomère contient de l'éthylène et/ou du propylène, ainsi qu'un acide carboxylique α,β-insaturé et/ou un acide sulfonique.

7. Procédé selon l'une quelconque des revendications 1 à 6, dans lequel l'ionomère contient de l'éthylène et au moins 9% d'un acide carboxylique α,β-insaturé ou d'acide sulfonique, les groupes acides étant neutralisés à hauteur de 20 à 90 % avec des ions zinc ou sodium.

8. Procédé selon l'une quelconque des revendications 1 à 7, dans lequel la proportion du caoutchouc ayant un degré de cristallinité inférieur à 20 % sur la totalité des polyoléfines est comprise entre 20 % et 70 %.

9. Procédé selon l'une quelconque des revendications 1 à 8, dans lequel la taille moyenne de domaine des composants polyoléfines utilisés est inférieure à 20 µm.

10. Procédé selon l'une quelconque des revendications 1 à 9, dans lequel la teneur en gel présente après la réticulation du film supérieur est comprise entre 10 % et 45 %.

11. Procédé selon l'une quelconque des revendications 1 à 10, dans lequel le film supérieur est muni d'une couche de mousse ou d'un film de mousse sur le côté arrière.
